# EUROPEAN PATENT APPLICATION

(11) **EP 2 933 008 A1**
(43) Date of publication of application: **21.10.2015**
(21) Application number: 15162089.5
(22) Date of filing: 31.03.2015
(51) Int. Cl.: B01D 53/14, F23J 15/00

(54) **CARBON DIOXIDE RECOVERY APPARATUS AND CARBON DIOXIDE RECOVERY METHOD - ABSORBENT REGENERATION INVOLVING PHASE SEPARATION**

(30) Priority: 18.04.2014 JP 2014086569
(71) Applicant: Kabushiki Kaisha Toshiba, Tokyo 105-8001 (JP)
(72) Inventor: Muraoka, Daigo, Tokyo (JP); Murai, Shinji, Tokyo (JP); Maezawa, Yukishige, Tokyo (JP); Hodotsuka, Masatoshi, Tokyo (JP)
(74) Representative: Granleese, Rhian Jane

(57) **Abstract**

The CO₂ recovery apparatus 10A includes: an absorption tower 11 in which a discharge gas 21 is contacted with a second lean solution 22B to allow the second lean solution 22B to absorb CO₂; a temperature regulator 12 in which a first rich solution 23A discharged from the absorption tower is heated or cooled to allow the first rich solution 23A to be a solution in which a precipitate containing the reaction accelerator is dispersed; a phase separator 13 in which a second rich solution 23B passed through the temperature regulator 12 is separated into an amino group-containing compound rich phase 31 and a reaction accelerator rich phase 32; a regeneration tower 15 in which a third rich solution 23C is regenerated; and a solution mixing line L13A through which a reaction accelerator rich solution 34 is supplied to a first lean solution 22A discharged from the regeneration tower 15.

## Description

### FIELD

An embodiment of the present invention relates to a carbon dioxide recovery apparatus and a carbon dioxide recovery method.

### BACKGROUND

In recent years, as effective measures against the problems of global warming, there has been pursued, for example, development of a system for bringing carbon dioxide (CO₂) in discharge gases such as combustion discharge gases generated in thermal power plants and the like into contact with an absorbing liquid, separating and recovering CO₂ in the discharge gases, and storing recovered CO₂ without diffusing recovered CO₂ into atmospheric air, i.e., a carbon dioxide capture and storage system (CCS system). As the absorbing liquid, an amine-based absorbing liquid comprising an amine compound and a solvent such as water or an organic solvent has been preferably used.

Apparatuses for separating and recovering CO₂ in discharge gases include a CO₂ recovery apparatus including an absorption tower in which an absorbing liquid and a discharge gas are brought into contact with each other to allow the absorbing liquid to absorb CO₂ in the discharge gas and a regeneration tower in which the absorbing liquid absorbing CO₂ is heated to release CO₂ from the absorbing liquid. In the absorption tower, CO₂ in the discharge gas is absorbed in the absorbing liquid to remove CO₂ from the discharge gas. The absorbing liquid absorbing CO₂ (rich solution) is supplied into the regeneration tower, CO₂ is released from the absorbing liquid in the regeneration tower, the absorbing liquid is regenerated, and CO₂ is recovered. The absorbing liquid regenerated in the regeneration tower (lean solution) is supplied to the absorption tower and reused for absorbing CO₂ in the discharge gas. In the CO₂ recovery apparatus, CO₂ in the discharge gas is separated and recovered by repeating the absorption of CO₂ in the absorption tower and the release of CO₂ in the regeneration tower.

As the absorbing liquid, an amine-based absorbing liquid containing a certain amino group-containing compound such as an alkanolamine structurally having steric hindrance has high selectivity of an acid gas such as CO₂ and has a small amount of energy needed for desorbing and regenerating an acid gas. Therefore, in such an apparatus that separates and recovers CO₂, the amount of energy for heating a rich solution to desorb CO₂ contained in the rich solution in a regeneration tower is reduced by using an amine-based absorbing liquid containing an amino group-containing compound structurally having steric hindrance.

### BRIEF DESCRIPTION OF THE DRAWINGS

FIG. 1 is a schematic view illustrating the construction of a carbon dioxide recovery apparatus of a first embodiment;
FIG. 2 is a schematic view illustrating the construction of a carbon dioxide recovery apparatus of a second embodiment;
FIG. 3 is a schematic view illustrating the construction of a carbon dioxide recovery apparatus of a third embodiment;
FIG. 4 is a schematic view illustrating the construction of a carbon dioxide recovery apparatus of a fourth embodiment; and
FIG. 5 is a schematic view illustrating the construction of a carbon dioxide recovery apparatus of a fifth embodiment.

### DETAILED DESCRIPTION

A carbon dioxide recovery apparatus according to one embodiment includes: an absorption tower in which a discharge gas containing CO₂ is contacted with an absorbing liquid comprising an amino group-containing compound with steric hindrance and a reaction accelerator to allow said absorbing liquid to absorb CO₂; a temperature regulation unit in which a first rich solution discharged from said absorption tower is heated or cooled to be a solution in which a precipitate comprising said reaction accelerator is dispersed or to be a solution comprising a reaction accelerator rich phase comprising a large amount of said reaction accelerator compared to said first rich solution; a phase separation unit in which a second rich solution, said second rich solution being an absorbing liquid passed through said temperature regulation unit, is separated into an amino group-containing compound rich phase and a reaction accelerator rich phase to discharge said amino group-containing compound rich phase as a third rich solution and to discharge said reaction accelerator rich phase as a reaction accelerator rich solution, said amino group-containing compound rich phase comprising a large amount of an amino group-containing compound compared to said first rich solution, and said reaction accelerator rich phase comprising a large amount of said reaction accelerator compared to said first rich solution; a regeneration tower in which CO₂ contained in said third rich solution is separated to regenerate said third rich solution; and a solution mixing line through which said reaction accelerator rich solution is supplied to a first lean solution which is an absorbing liquid discharged from said regeneration tower.

A carbon dioxide recovery method according to another embodiment includes: a CO₂ recovery step of contacting a discharge gas containing CO₂ with an absorbing liquid comprising an amino group-containing compound with steric hindrance and a reaction accelerator to allow said absorbing liquid to absorb CO₂ in an absorption tower; a temperature regulation step of heating or cooling a first rich solution which is an absorbing liquid discharged from said absorption tower to allow said first rich solution to be a solution in which a precipitate comprising said reaction accelerator is dispersed or to be a solution comprising a reaction accelerator rich phase comprising a large amount of said reaction accelerator compared to said first rich solution in a temperature regulation unit; a phase separation step of separating a second rich solution, said second rich solution being an absorbing liquid passed through said temperature regulation unit, into an amino group-containing compound rich phase and a reaction accelerator rich phase to discharge said amino group-containing compound rich phase as a third rich solution and to discharge said reaction accelerator rich phase as a reaction accelerator rich solution, said amino group-containing compound rich phase comprising a large amount of an amino group-containing compound compared to said first rich solution, and said reaction accelerator rich phase comprising a large amount of said reaction accelerator compared to said first rich solution; a regeneration step of separating CO₂ contained in said third rich solution to regenerate said third rich solution in a regeneration tower; and a solution mixing step of mixing a first lean solution which is an absorbing liquid discharged from said regeneration tower with said reaction accelerator rich solution.

Embodiments of the present invention will be described in detail below.

### (First Embodiment)

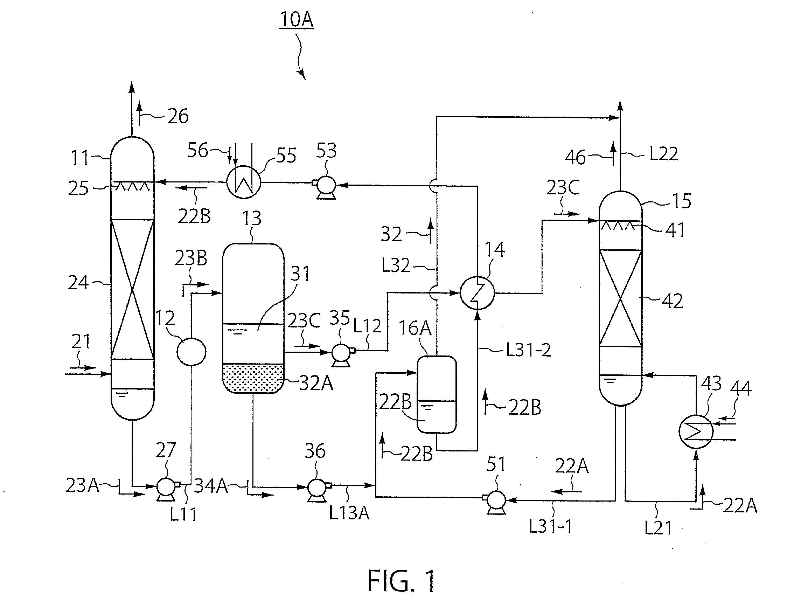

A carbon dioxide (CO₂) recovery apparatus according to a first embodiment will be described with reference to the drawings. FIG.1 is a schematic view illustrating the construction of the CO₂ recovery apparatus according to the first embodiment. As illustrated in FIG. 1, the CO₂ recovery apparatus 10A includes an absorption tower 11, a temperature regulator (temperature regulation unit) 12, a phase separator (phase separation unit) 13, a first heat exchanger (first heat exchange unit) 14, a regeneration tower 15, and a first gas/liquid separator (first gas/liquid separation unit) 16A.

In the CO₂ recovery apparatus 10A, an absorbing liquid absorbing CO₂ in a discharge gas 21 containing CO₂ is circulated through a portion between the absorption tower 11 and the regeneration tower 15 (hereinafter referred to as "interior of system"). An absorbing liquid (rich solution) absorbing CO₂ in the discharge gas 21 is fed from the absorption tower 11 to the regeneration tower 15. The absorbing liquid (lean solution) regenerated by removing virtually all of CO₂ from the rich solution in the regeneration tower 15 is fed from the regeneration tower 15 to the absorption tower 11.

In the present embodiment, when an absorbing liquid is simply described, the absorbing liquid refers to a lean solution and/or a rich solution. In the present embodiment, the lean solution refers to the collective designation of first and second lean solutions 22A and 22B, while the rich solution refers to the collective designation of first to third rich solutions 23A to 23C. The first lean solution 22A is an absorbing liquid regenerated by removing virtually all of CO₂ in the regeneration tower 15. The second lean solution 22B is an absorbing liquid in which the first lean solution 22A is mixed with a solution of a reaction accelerator rich phase, generated by the phase separator 13 and containing a large amount of a reaction accelerator compared to an absorbing liquid discharged from the absorption tower 11. The first rich solution 23A is an absorbing liquid that absorbs CO₂ in the discharge gas 21 and is discharged from the absorption tower 11. The second rich solution 23B is a solution contained in a state in which a precipitate containing the reaction accelerator is dispersed or an absorbing liquid contained in a state in which a reaction accelerator rich phase containing a large amount of the reaction accelerator compared to the first lean solution 22A is formed, due to temperature regulation between the absorption tower 11 and the phase separator 13. The third rich solution 23C is a solution of an amino group-containing compound rich phase, generated by the phase separator 13 and containing a large amount of an amino group-containing compound compared to the absorbing liquid discharged from the absorption tower 11.

The discharge gas 21 is a discharge gas containing CO₂, such as a combustion discharge gas discharged from a boiler, a gas turbine, or the like in a thermal power plant or the like or a process discharge gas generated from ironworks. The discharge gas 21 is pressurized by a discharge gas blower or the like, cooled in a cooling tower, and then supplied from a side wall of the tower bottom (lower portion) of the absorption tower 11 into the tower through a flue.

In the absorption tower 11, the discharge gas 21 containing CO₂ is contacted with an absorbing liquid (second lean solution 22B in the present embodiment) to allow the second lean solution 22B to absorb CO₂. The absorption tower 11 includes, for example, a counterflow gas-liquid contactor. The absorption tower 11 includes: an absorption unit 24 including a filler for enhancing the efficiency of gas-liquid contact; and a spray nozzle 25, in the tower. The discharge gas 21 fed into the tower flows from a lower portion in the tower toward a tower top (upper portion). The second lean solution 22B is fed from the upper portion of the tower into the tower and sprayed into the tower by the spray nozzle 25. In the absorption tower 11, the discharge gas 21 moving upward in the tower comes into counterflow contact with the second lean solution 22B, and CO₂ in the discharge gas 21 is absorbed in the second lean solution 22B and removed, in the absorption unit 24.

A method of bringing the discharge gas 21 into contact with the second lean solution 22B in the absorption tower 11 is not limited to the method described above, but may be, for example, a method of allowing the second lean solution 22B to bubble with the discharge gas 21 to allow the second lean solution 22B to absorb CO₂; and the like.

The second lean solution 22B absorbs CO₂ in the discharge gas 21 in the absorption unit 24 and becomes the first rich solution 23A, which is stored in a lower portion. In contrast, a CO₂-removed discharge gas 26 from which CO₂ is removed in the absorption tower 11 is discharged from the upper portion of the absorption tower 11 to the outside.

The absorbing liquid is an aqueous amine-based solution containing an amine-based compound (amino group-containing compound) structurally having steric hindrance, a reaction accelerator, and water. It is preferable to use, in the absorbing liquid, an aqueous amine solution having an amino group-containing compound that is reversibly changed to hydrophilicity or hydrophobicity depending on temperature. As the amino group-containing compound, one or more selected from the group consisting of alkanolamines can be used.

The amino group-containing compound preferably contains at least one amino group-containing compound (hereinafter referred to as a temperature-sensitive nitrogen compound (A)) represented by the following general formula (1): 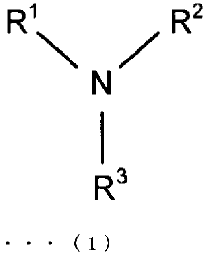 (in the above formula (1), R¹ is hydroxyalkyl, R² is unsubstituted C₃-C₁₀ cyclic alkyl, and R³ is hydrogen or unsubstituted alkyl).

In the above formula (1), R¹ is a hydroxyalkyl group, which imparts a temperature-sensitive nitrogen-containing compound mainly with hydrophilicity. The alkyl group that forms R¹ is straight or branched. The number of hydroxy groups in R¹ is not particularly limited if being one or more. The bonding site of each of the hydroxy groups to the alkyl group is not particularly limited. The number and bonding sites of the hydroxy groups in R¹ may be appropriately selected depending on lower critical solution temperature demanded for the temperature-sensitive nitrogen-containing compound (A) (water solubility is exhibited at less than LCST (lower critical solution temperature) and water insolubility is exhibited at LCST or more), water solubility, and the performance of absorption of an acid gas such as CO₂. The number of carbon atoms in R¹ is preferably 2 to 4. In view of acid gas absorption performance and water solubility, hydroxyethyl, 2-hydroxypropyl, 3-hydroxypropyl, or 2,3-dihydroxypropyl is more preferred, and hydroxyethyl is still more preferred.

The temperature-sensitive nitrogen-containing compound (A) exhibits hydrophilicity at low temperature and hydrophobicity at high temperature since the action of a hydrophilic group is higher at low temperature and the action of a hydrophobic group is higher at high temperature.

In the above formula (1), R² is unsubstituted, C₃-C₁₀, more preferably C₃-C₈ cyclic alkyl. The temperature-sensitive nitrogen-containing compound (A) produces various reaction products with acid gases to thereby absorb the acid gases. The temperature-sensitive nitrogen-containing compound (A) has steric hindrance, and the steric hindrance greatly influences the kinds of the reaction products. For example, when the temperature-sensitive nitrogen-containing compound (A) absorbs CO₂, bicarbonate ions are advantageously produced due to the steric hindrance of the compound. Since heat of reaction is comparatively low in the reaction of to producing bicarbonate ions from the temperature-sensitive nitrogen-containing compound (A) and CO₂, the heat of reaction in the absorption of CO₂ can be reduced to improve CO₂ absorption power due to the adequate steric hindrance of the temperature-sensitive nitrogen-containing compound (A).

In the above formula (1), R² has the function of applying adequate steric hindrance to the temperature-sensitive nitrogen-containing compound (A) to improve acid gas absorption performance. R² that is cyclic alkyl results in a structure, in which steric hindrance is great, and in excellent acid gas absorption performance, for example, compared to a case in which R² is chain alkyl.

Among the cyclic alkyl groups described above, a cyclopropyl, cyclobutyl, cyclopentyl, or cyclohexyl group is preferred as R² from the viewpoint of acid gas absorption performance and water solubility. Cyclopentyl and cyclohexyl groups are particularly preferred, and in this case, high steric hindrance can be applied to the temperature-sensitive nitrogen-containing compound (A) while maintaining the favorable solubility of the temperature-sensitive nitrogen-containing compound (A) in water. Thus, the effect of reducing the heat of reaction in absorption of an acid gas can be enhanced to provide excellent acid gas absorption performance.

In the above formula (1), R³ is hydrogen or unsubstituted alkyl. R³ can be appropriately selected in consideration of, for example, interaction with physical properties expressed by the R¹ and R² described above depending on acid gas absorption performance and phase separation performance demanded for the temperature-sensitive nitrogen-containing compound (A). Specifically, R³ is preferably hydrogen or C₁-C₃ alkyl, more preferably hydrogen or methyl, when the number of carbon atoms in R² is 3 to 10. In a case in which R² is cyclopentyl, cyclohexyl, cycloheptyl, or cyclooctyl, the temperature-sensitive nitrogen-containing compound (A) exhibits a favorable phase separation property while exerting favorable acid gas absorption performance when R³ is methyl.

In view of phase separation properties and acid gas absorption performance, 2-(cyclopentylamino)ethanol, 1-(cyclopentylamino)-2-propanol, 3-(cyclopentylamino)-1,2-propanediol, 4-(cyclopentylamino)-1-butanol, 2-(cyclohexylamino)ethanol, 1-(cyclohexylamino)-2-propanol, 3-(cyclohexylamino)-1,2-propanediol, 2-(cycloheptylamino)ethanol, 1-(cycloheptylamino)-2-propanol, 1-(cycloheptylamino)-1,2-propanediol, 2-(cyclooctylamino)ethanol, 3-(cyclooctylamino)-1,2-propanediol, 3-(cyclohexylamino)-1-propanol, 2-(N-cyclopentyl-N-methylamino)ethanol, 1-(N-cyclopentyl-N-methylamino)-2-propanol, 3-(N-cyclopentyl-N-methylamino)-1,2-propanediol, 4-(N-cyclopentyl-N-methylamino)-1-butanol, 2-(N-cyclohexyl-N-methylamino)ethanol, 1-(N-cyclohexyl-N-methylamino)-2-propanol, 3-(N-cyclohexyl-N-methylamino)-1,2-propanediol, 2-(N-cycloheptyl-N-methylamino)ethanol, 1-(N-cycloheptyl-N-methylamino)-2-propanol, 3-(N-cycloheptyl-N-methylamino)-1,2-propanediol, 2-(N-cyclooctyl-N-methylamino)ethanol, 3-(N-cyclooctyl-N-methylamino)-1,2-propanediol, 3-(N-cyclohexyl-N-methylamino)-1-propanol, 2-(N-cyclopentyl-N-ethylamino)ethanol, 1-(N-cyclopentyl-N-ethylamino)-2-propanol, 3-(N-cyclopentyl-N-ethylamino)-1,2-propanediol, 4-(N-cyclopentyl-N-ethylamino)-1-butanol, 2-(N-cyclohexyl-N-methylamino)ethanol, 1-(N-cyclohexyl-N-ethylamino)-2-propanol, 3-(N-cyclohexyl-N-ethylamino)-1,2-propanediol, 2-(N-cycloheptyl-N-ethylamino)ethanol, 1-(N-cycloheptyl-N-ethylamino)-2-propanol, 3-(N-cycloheptyl-N-ethylamino)-1,2-propanediol, 2-(N-cyclooctyl-N-ethylamino)ethanol, 3-(N-cyclooctyl-N-ethylamino)-1,2-propanediol, 3-(N-cyclohexyl-N-ethylamino)-1-propanol, or the like are preferably used as the temperature-sensitive nitrogen-containing compound (A).

The LCST of the temperature-sensitive nitrogen compound (A) is preferably 50°C or more and 100°C or less, more preferably 50°C or more and 80°C or less. As explained below, the temperature-sensitive nitrogen compound (A) partially releases an acid gas, such as CO₂, absorbed in a temperature rising process, even at less than the LCST. In other words, when the LCST is more than 100°C, heating temperature in the case of phase separation becomes high, and energy used for releasing CO₂ is increased. In contrast, when the LCST is less than 50°C, the absorbing liquid may undergo phase separation in the case of absorbing an acid gas, and acid gas absorption efficiency may be deteriorated.

The content of the temperature-sensitive nitrogen compound (A) in the absorbing liquid is preferably 15 to 50 mass%, more preferably 20 to 50 mass%, with respect to the total amount of the absorbing liquid. When an amino group-containing compound is used in the absorbing liquid, the higher concentration of the amino group-containing compound generally results in the more amounts of absorbed and desorbed acid gases per unit volume and in higher acid gas absorption and desorption rates. Therefore, the higher concentration is preferred in view of reduction in energy consumption and the size of a plant facility and of improvement of treatment efficiency. However, when the concentration of the amino group-containing compound in the absorbing liquid is excessively high, water contained in the absorbing liquid is unable to sufficiently exert a function as an activator for absorption of an acid gas. In addition, the excessively high concentration of the amino group-containing compound in the absorbing liquid results in an unignorable drawback such as rise in the viscosity of the absorbing liquid. When the content of the temperature-sensitive nitrogen compound (A) in the absorbing liquid is 50 mass% or less, any phenomenon such as the rise in the viscosity of the absorbing liquid or the deteriorated functional of water as the absorbing liquid does not occur. By allowing the content of the temperature-sensitive nitrogen compound (A) to be 15 mass% or more, the sufficient amount and rate of absorption by the absorbing liquid can be obtained and excellent treatment efficiency can be obtained.

A content of the temperature-sensitive nitrogen compound (A) of 15 to 50 mass% results not only in the large amount of absorbed CO₂ and the high rate of absorbing CO₂ but also in the large amount of desorbed CO₂ and the high rate of desorbing CO₂ in the case of using the absorbing liquid for recovering CO₂. Therefore, the content is advantageous in view of enabling efficient recovery of CO₂.

A reaction accelerator accelerates a reaction between an amino group-containing compound and CO₂. As the reaction accelerator, there can be used an alkanolamine and/or a heterocyclic amine compound (hereinafter referred to as a heterocyclic amine compound (2)) represented by the following general formula (2):

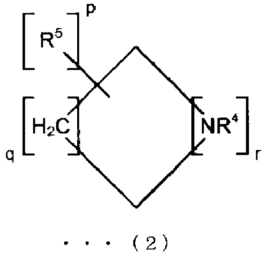

In the above formula (2), R⁴ represents hydrogen or C₁-C₄ alkyl, R⁵ represents C₁-C₄ alkyl bound to a carbon atom, r represents an integer from 1 to 3, q represents an integer from 1 to 4, and p represents an integer from 0 to 12. When r is 2 to 3, nitrogen atoms are not directly bound to each other. When q is 2, r is an integer of 1 or 2. Each of some of the hydrogen atoms of C₁-C₄ alkyl in R⁴ and some of the hydrogen atoms of C₁-C₄ alkyl in R⁵ may be substituted by a hydroxyl group or an amino group.

The amount of absorbed acid gas such as CO₂ per unit mole of the amino group-containing compound, the amount of absorbed acid gas per unit volume of the absorbing liquid, and the rate of absorption of an acid gas can be still more improved by using the amino group-containing compound mixed with an alkanolamine and/or the heterocyclic amine compound (2). By using the amino group-containing compound mixed with an alkanolamine and/or the heterocyclic amine compound (2), energy for separating an acid gas after absorption of the acid gas (acid gas desorption energy) is also decreased to enable energy for regenerating the rich solution 23 to be reduced.

Examples of alkanolamines as reaction accelerators include monoethanolamine, 2-amino-2-methyl-1-propanol, 2-amino-2-methyl-1,3-dipropanolamine, methylaminoethanol, ethylaminoethanol, propylaminoethanol, diethanolamine, bis(2-hydroxy-1-methylethyl)amine, methyldiethanolamine, dimethylethanolamine, diethylethanolamine, triethanolamine, dimethylamino-1-methylethanol, 2-methylaminoethanol, 2-ethylaminoethanol, 2-propylaminoethanol, n-butylaminoethanol, 2-(isopropylamino)ethanol, 3-ethylaminopropanol, triethanolamine, diethanolamine, and the like. As used herein, "alkanolamine" refers to a compound having an amino group and a hydroxyl group in one molecule.

Among these alkanolamine, at least one selected from the group consisting of 2-(isopropylamino)ethanol, 2-(ethylamino)ethanol, and 2-amino-2-methyl-1-propanol is preferred as the alkanolamine from the viewpoint of further improving the reactivity of a tertiary amine with an acid gas such as CO₂.

Examples of heterocyclic amine compounds include azetidine, 1-methylazetidine, 1-ethylazetidine, 2-methylazetidine, 2-azetidinemethanol, 2-(2-aminoethyl)azetidine, pyrrolidine, 1-methylpyrrolidine, 2-methylpyrrolidine, 2-butylpyrrolidine, 2-pyrrolidylmethanol, 2-(2-aminoethyl)pyrrolidine, piperidine, 1-methylpiperidine, 2-ethylpiperidine, 3-propylpiperidine, 4-ethylpiperidine, 2-piperidylmethanol, 3-piperidylethanol, 2-(2-aminoethyl)pyrrolidine, hexahydro-1H-azepine, hexamethylenetetramine, piperazine, piperazine derivatives, and the like.

Among these heterocyclic amine compounds, the piperazine derivatives are particularly desirable from the viewpoint of improvement of the amount and rate of absorption of an acid gas in the absorbing liquid. Such a piperazine derivative is a secondary amine compound, in which in general, a nitrogen atom in a secondary amino group is bound to carbon dioxide to form a carbamate ion to contribute to improvement of an absorption rate in an early reaction stage. Further, a nitrogen atom in the secondary amino group has the role of converting CO₂ bound to the nitrogen atom into a bicarbonate ion (HCO₃⁻) and contributes to improvement of a rate in the stage of the latter half of a reaction.

As such a piperazine derivative, at least one of 2-methylpiperazine, 2,5-dimethylpiperazine, 2,6-dimethylpiperazine, 1-methylpiperazine, 1-(2-hydroxyethyl)piperazine, and 1-(2-aminoethyl)piperazine is more preferred.

The content of the reaction accelerator (alkanolamine and/or heterocyclic amine compound (2)) contained in the absorbing liquid is preferably 1 to 15 mass%. A content of the reaction accelerator of less than 1 mass% may result in the insufficient effect of improving the rate of absorption of an acid gas. When the content of the reaction accelerator contained in the absorbing liquid is more than 15 mass%, the viscosity of the absorbing liquid may be excessively increased, and if anything, reactivity may be deteriorated.

The pH of the absorbing liquid is preferably adjusted to 9 or more. The pH of absorbing liquid can be adjusted by adding a pH adjuster to the absorbing liquid. The pH of the absorbing liquid is appropriately adjusted to an optimum condition depending on the kinds, concentrations, flow rates, and the like of gas components contained in the discharge gas 21.

In the present embodiment, the absorbing liquid is separated into two solid-liquid or liquid-liquid phases depending on a condition such as the kind or concentration of an amino group-containing compound, the temperature of the absorbing liquid, or CO₂ dissolution concentration. Pre-understanding of the above condition such as the kind or concentration of the amino group-containing compound, the temperature of the absorbing liquid, or CO₂ dissolution concentration, and of a relationship in which the absorbing liquid is changed to two solid-liquid or liquid-liquid phases can cause the phase separation of the absorbing liquid to be controlled.

In the present embodiment, based on a correlation between the solubility of the reaction accelerator with water and a solidification effect, and the like, when the absorbing liquid is at 20 to 60°C, preferably 20 to 50°C, more preferably 30 to 40°C, the absorbing liquid becomes in a state in which the reaction accelerator in the absorbing liquid is solidified to disperse a precipitate containing the reaction accelerator in the absorbing liquid, so that the absorbing liquid becomes a slurry solution containing the precipitate containing the solidified reaction accelerator in the state of being dispersed. The shape of the precipitate is a granular shape or the like without particular limitation. When the absorbing liquid is at 60 to 120°C, a state in which the reaction accelerator in the absorbing liquid is dissolved in the absorbing liquid is maintained. The absorbing liquid is preferably at not less than 67°C or not more than 100°C. When the absorbing liquid is at 60 to 120°C, the absorbing liquid becomes a solution in which there is formed a mixed phase including two phases of an amino group-containing compound rich phase containing a large amount of an amino group-containing compound compared to the first rich solution 23A and a reaction accelerator rich phase containing a large amount of the reaction accelerator compared to the first rich solution 23A and containing the reaction accelerator in the state of being dissolved.

The absorbing liquid may appropriately contain, in addition to the amino group-containing compound, reaction accelerator, and solvent such as water described above, arbitrary proportions of other compounds such as a nitrogen-containing compound for improving the performance of absorption of an acid gas such as CO₂, an anticorrosive agent based on phosphate or the like for preventing the corrosion of plant facilities, an antifoaming agent based on silicone or the like for preventing foaming, an oxidation inhibitor for preventing the deterioration of the absorbing liquid, and a pH adjuster as long as the effects of the absorbing liquid are not deteriorated.

The temperature of the absorbing liquid in the case of allowing the absorbing liquid to absorb the discharge gas 21 is typically from room temperature to 60°C or less. The temperature is preferably 50°C or less, more preferably around 20 to 45°C. The amount of absorbed CO₂ is increased with lowering the temperature. The lower limit of the treatment temperature depends on the temperature of a gas in a process, a heat recovery target, and the like. Typically, pressure in the absorption of CO₂ is approximately atmospheric pressure. Although pressurization to higher pressure can also be performed in order to enhance absorption performance, it is preferable to perform the pressurization under atmospheric pressure in order to reduce the consumption of energy needed for compression.

An example of the amount of CO₂ absorbed in the absorbing liquid supplied to the absorption tower 11 will be described. In the absorption tower 11, the amount of CO₂ absorbed in the absorbing liquid containing 15 to 50 mass% of the temperature-sensitive nitrogen compound (A) described above in the absorption of CO₂ (40°C) is around 0.20 to 0.85 mol per mole of amine contained in the absorbing liquid. In the absorption tower 11, the rate of absorption of CO₂ is around 0.006 to 0.009 mol/min after a lapse of several minutes from the point of the time of starting the absorption of CO₂ in the absorbing liquid containing 10 to 50 mass% of the temperature-sensitive nitrogen compound (A) described above.

A CO₂ saturation absorption amount is a value obtained by measuring the amount of inorganic carbon in an absorbing liquid by an infrared gas concentration measuring apparatus. A CO₂ absorption rate is a value measured using an infrared carbon dioxide meter at the time of a lapse of several minutes from the point of the time of starting the absorption of CO₂.

As illustrated in FIG. 1, the first rich solution 23A stored in the lower portion of the absorption tower 11 is discharged from the lower part of absorption tower 11 to a first rich solution supply line L11. The first rich solution 23A is force-fed by a pump 27 disposed in the first rich solution supply line L11 and is subjected to heat exchange in a temperature regulator 12.

The temperature regulator 12 heats or cools the first rich solution 23A. The temperature regulator 12 can be used if including a heating unit for heating the first rich solution 23A or a cooling unit. The kind of the temperature regulator 12 is not particularly limited. For example, a known heat exchanger such as a plate heat exchanger or a shell & tube heat exchanger can be used as the temperature regulator 12. When the temperature regulator 12 is a heat exchanger, a heating medium or a cooling medium may also be used to be subjected to heat exchange with the first rich solution 23A. As the heating medium, there can be used, for example, the lean solution 22A, the lean solution 22B, vapor from power plants, a CO₂ gas separated from the regeneration tower 15, or the like. As the cooling medium, for example, the second rich solution 23B or the like can be used.

The first rich solution 23A is heated or cooled to 20 to 60°C, preferably 20 to 50°C, more preferably 30 to 40°C, based on a correlation between the solubility of the reaction accelerator with water and a solidification effect, and the like, by the temperature regulator 12. The first rich solution 23A becomes in a state in which the reaction accelerator in the first rich solution 23A is solidified to disperse a precipitate containing the reaction accelerator in the absorbing liquid when the temperature of the first rich solution 23A is within the above range. Thus, the first rich solution 23A is regulated into the above temperature range by the temperature regulator 12 and thereby becomes a slurry solution (precipitate dispersion liquid) containing the precipitate containing the reaction accelerator in the state of being dispersed in the absorbing liquid. Then, the first rich solution 23A becomes in a state in which the precipitate containing the reaction accelerator is dispersed by the temperature regulator 12 and is supplied as the second rich solution 23B to the phase separator 13.

In the phase separator 13, the second rich solution 23B is subjected to phase separation into an amino group-containing compound rich phase 31 and a reaction accelerator rich phase 32A. The amino group-containing compound rich phase 31 is a phase containing a large amount of an amino group-containing compound compared to the first rich solution 23A. The reaction accelerator rich phase 32A is a phase which contains a large amount of the reaction accelerator compared to the first rich solution 23A and in which the concentration of the precipitate containing the reaction accelerator is high compared to the second rich solution 23B. The reaction accelerator rich phase 32A is precipitated and formed in the lower portion of the phase separator 13 while the amino group-containing compound rich phase 31 is formed in the upper portion of the reaction accelerator rich phase 32A. As a result, the amino group-containing compound rich phase 31 and the reaction accelerator rich phase 32A are formed in the state of being phase-separated in the phase separator 13.

As the phase separator 13, there can be specifically used a separation apparatus having a function similar to that of a settler unit in a mixer-settler composed of a mixer unit including a mixer for mixing a raw material and the settler unit in which a mixed liquid obtained by the mixer unit is separated based on a difference in specific gravity between solutions contained in the mixed liquid, and the like.

The reaction accelerator rich phase 32A, which is a phase formed by precipitating the precipitate containing the reaction accelerator, has a smaller solvent amount than that of the amino group-containing compound rich phase 31. Therefore, most of CO₂ contained in the second rich solution 23B exists in a side closer to the amino group-containing compound rich phase 31, and the amount of CO₂ contained in the reaction accelerator rich phase 32A is smaller than that in a side closer to the amino group-containing compound rich phase 31.

The amino group-containing compound rich phase 31 is discharged from the upper portion of the phase separator 13 while the reaction accelerator rich phase 32A is discharged from the lower portion of the phase separator 13. The amino group-containing compound rich phase 31 is force-fed as the third rich solution 23C from the phase separator 13 through a second rich solution supply line L12 by a pump 35 disposed in the second rich solution supply line L12, and is supplied to a first heat exchanger 14. As the first heat exchanger 14, there can be used a known heat exchanger such as a plate heat exchanger or a shell & tube heat exchanger. The third rich solution 23C is subjected to heat exchange, in the first heat exchanger 14, with the second lean solution 22B in which the first lean solution 22A regenerated in the regeneration tower 15 is mixed with a reaction accelerator rich solution 34A, and is thereafter supplied to the upper portion of the regeneration tower 15.

The reaction accelerator rich phase 32A discharged from the phase separator 13 is discharged as the reaction accelerator rich solution 34A into a solution mixing line L13A. The solution mixing line L13A, which is linked to a first lean solution supply line L31-1, is a line for supplying the reaction accelerator rich solution 34A to the first lean solution 22A. The reaction accelerator rich solution 34A is force-fed through the solution mixing line L13A by a pump 36 disposed in the solution mixing line L13A and is mixed into the first lean solution 22A passing through the lean solution discharge line L12. As the pump 36, for example, there may be used a slurry pump that permits sufficient transfer even in a solid-liquid two-phase state.

The regeneration tower 15 is a tower in which CO₂ is released from the third rich solution 23C to regenerate the absorbing liquid as the first lean solution 22A. The regeneration tower 15 includes a spray nozzle 41 and a fill layer 42 for enhancing the efficiency of gas-liquid contact in the tower. The third rich solution 23C supplied from the upper portion of the regeneration tower 15 into the tower is supplied into the interior of the tower through the spray nozzle 41, falls from the upper portion of the regeneration tower 15, and is heated by water vapor (steam) supplied from the lower portion of the regeneration tower 15 while passing through the fill layer 42. The water vapor is generated by heat exchange of the first lean solution 22A with saturated steam 44 in a regeneration superheater (reboiler) 43. The third rich solution 23C is heated by the water vapor, whereby most of CO₂ contained in the third rich solution 23C is desorbed, the first lean solution 22A from which almost all CO₂ is removed is generated at about the time when the third rich solution 23C reaches the lower portion of the regeneration tower 15. As a result, the first lean solution 22A is stored in the lower portion of the regeneration tower 15.

Part of the first lean solution 22A stored in the lower portion of the regeneration tower 15 is discharged from the lower portion of the regeneration tower 15 through a lean solution circulation line L21, heated by the reboiler 43, and then resupplied into the regeneration tower 15. In this case, the first lean solution 22A is heated by the reboiler 43, to generate water vapor, and remaining CO₂ is released as a CO₂ gas. The generated water vapor and CO₂ gas are returned into the regeneration tower 15, pass through the fill layer 42 of the regeneration tower 15, move upward, and heat the third rich solution 23C flowing down. As a result, CO₂ in the first lean solution 22A is released as a CO₂ gas from the interior of the regeneration tower 15.

In the present embodiment, the third rich solution 23C is heated to 70°C or more in the regeneration tower 15. In the regeneration tower 15, the third rich solution 23C is heated to preferably have a temperature of 80°C or more, more preferably 90 to 120°C, and CO₂ in the third rich solution 23C is desorbed and released. The amount of desorbed CO₂ in the third rich solution 23C is increased with increasing the temperature while energy required for heating the third rich solution 23C is increased with increasing the temperature. Therefore, the temperature of the third rich solution 23C in the case of separating CO₂ depends on the temperature of a gas in a process, a heat recovery target, and the like. Typically, pressure in the desorption of CO₂ is approximately atmospheric pressure. Although the pressure can also be decreased to lower pressure in order to enhance desorption performance, atmospheric pressure is preferred for reducing the consumption of energy needed for reducing the pressure.

A method of releasing CO₂ from the third rich solution 23C to perform reproduction as the first lean solution 22A in the regeneration tower 15 is not limited to a method of allowing the third rich solution 23C to fall in mist form to achieve countercurrent contact between the third rich solution 23C and water vapor in the fill layer 42 to heat the third rich solution 23C but may be, for example, a method of heating the third rich solution 23C to release CO₂, and the like.

A CO₂ gas 46 released from the first lean solution 22A passes through the recovery CO₂ discharge line L22 and is discharged, together with water vapor simultaneously evaporating from the first lean solution 22A, from the upper portion of the regeneration tower 15.

The first lean solution 22A stored in the lower portion of the regeneration tower 15 is discharged as an absorbing liquid from the lower portion of the regeneration tower 15, force-fed from the lower portion of the regeneration tower 15 by a pump 51 disposed in the outside, and passed through the first lean solution supply line L31-1. The first lean solution 22A is mixed with the reaction accelerator rich solution 34A discharged from the phase separator 13 and is supplied as the second lean solution 22B to a first gas/liquid separator 16A.

The first gas/liquid separator 16A is for gas/liquid separation of CO₂ contained in the second lean solution 22B. Since the reaction accelerator rich solution 34A is a solution as which the reaction accelerator rich phase 32A is discharged from the phase separator 13, a slight amount of CO₂ is contained in the solution. The first lean solution 22A is a high-temperature solution because of being an absorbing liquid regenerated in the regeneration tower 15. Therefore, CO₂ contained in the reaction accelerator rich solution 34A is warmed by the first lean solution 22A, and desorbed and released from an amino group-containing compound in the reaction accelerator rich solution 34A. CO₂ contained in the second lean solution 22B is discharged as a CO₂ gas 52 from the upper portion of the first gas/liquid separator 16A into a first CO₂ discharge mixing line L32.

The first gas/liquid separator 16A discharges the second lean solution 22B from the lower portion of the main body into a second lean solution supply line L31-2 while separating CO₂ contained in the second lean solution 22B. The second lean solution 22B is force-fed by a pump 53 disposed in the second lean solution supply line L31-2, supplied from the first gas/liquid separator 16A to the first heat exchanger 14 through the second lean solution supply line L31-2, subjected to heat exchange with the third rich solution 23C in the first heat exchanger 14, and cooled. Then, the second lean solution 22B passes through the second lean solution supply line L31-2 from the first heat exchanger 14, is subjected to heat exchange with cooling water 56 in a cooler 55, is cooled, and is then supplied as an absorbing liquid to the absorption tower 11.

### (CO₂ Recovery Method Using CO₂ Recovery Apparatus 10A)

An example of a CO₂ recovery method using the CO₂ recovery apparatus 10A will now be described. The discharge gas 21 containing CO₂ is supplied to the absorption tower 11, followed by contacting the discharge gas 21 with the absorbing liquid (second lean solution 22B) in the absorption tower 11 to allow the second lean solution 22B to absorb CO₂(CO₂ recovery step).

The second lean solution 22B absorbs CO₂ in the discharge gas 21 in the absorption unit 24, becomes the first rich solution 23A, and is stored in a lower portion. The first rich solution 23A stored in the lower portion of the absorption tower 11 is discharged into the rich solution supply line L11. The first rich solution 23A discharged from the absorption tower 11 is supplied to the temperature regulator 12 through the rich solution supply line L11.

The first rich solution 23A is heated or cooled in a range of 20 to 60°C in the temperature regulator 12 and becomes a solution in which a precipitate containing a reaction accelerator is dispersed (temperature regulation step). The first rich solution 23A becomes in a state in which the precipitate containing the reaction accelerator is dispersed in the temperature regulator 12 and is supplied as the second rich solution 23B to the phase separator 13.

The second rich solution 23B passed through the temperature regulation unit is separated into the amino group-containing compound rich phase 31 containing a large amount of an amino group-containing compound compared to the first rich solution 23A and the reaction accelerator rich phase 32A containing a large amount of the reaction accelerator compared to the first rich solution 23A in the phase separator 13. Then, in the phase separator 13, the amino group-containing compound rich phase 31 is discharged as the third rich solution 23C, and the reaction accelerator rich phase 32A is discharged as a reaction accelerator rich solution 34 (phase separation step).

The third rich solution 23C passes through the second rich solution supply line L12 from the phase separator 13, is subjected to heat exchange, in the first heat exchanger 14, with the second lean solution 22B in which the first lean solution 22A which is an absorbing liquid discharged from the regeneration tower 15 is mixed with the reaction accelerator rich solution 34A, and is then supplied to the regeneration tower 15.

In the regeneration tower 15, CO₂ contained in the third rich solution 23C is separated to release CO₂ from the third rich solution 23C and to regenerate the third rich solution 23C (regeneration step).

The first lean solution 22A regenerated in the regeneration tower 15 is discharged from the lower portion of the regeneration tower 15, passed through the first lean solution supply line L31-1, and mixed with the reaction accelerator rich solution 34 discharged from the first gas/liquid separator 16A (solution mixing step). The first lean solution 22A mixed with the reaction accelerator rich solution 34 is supplied as the second lean solution 22B to the first gas/liquid separator 16A.

In the first gas/liquid separator 16A, CO₂ contained in the second lean solution 22B is separated (first gas/liquid separation step). Then, the second lean solution 22B is discharged from the lower portion of the main body into the second lean solution supply line L31-2. The second lean solution 22B passes through the second lean solution supply line L31-2 from the first gas/liquid separator 16A and is subjected to heat exchange with the third rich solution 23C in the first heat exchanger 14 (the first heat exchange step). Then, the second lean solution 22B is supplied to the absorption tower 11.

As described above, the absorbing liquid is circulated through a portion between the absorption tower 11 and the regeneration tower 15 (interior of system), and the absorbing liquid (second lean solution 22B) regenerated in the regeneration tower 15 is reused in the absorption tower 11.

As described above, according to the present embodiment, since the CO₂ recovery apparatus 10A includes the temperature regulator 12 and the phase separator 13, the reaction accelerator contained in the first rich solution 23A can be removed as a particulate precipitate from the second rich solution 23B, followed by supplying only the amino group-containing compound rich phase 31 as the third rich solution 23C to the regeneration tower 15. The absorbing liquid contains the reaction accelerator, whereby the CO₂ absorption rate of the absorbing liquid is increased in the absorption tower 11 while separation of CO₂ from the absorbing liquid is inhibited in the regeneration tower 15. According to the present embodiment, since the content of the reaction accelerator in the first rich solution 23A can be reduced beforehand, followed by supplying the absorbing liquid to the regeneration tower 15, dissociation of CO₂ contained in the third rich solution 23C can be facilitated in the regeneration tower 15. In the CO₂ recovery apparatus 10A, energy needed for generating steam by the reboiler 43 in order to separate and recover CO₂ from the third rich solution 23C can be reduced.

It is important to substantially equalize the amount of CO₂ absorbed an absorbing liquid in an absorption tower and the amount of CO₂ released from the absorbing liquid in a regeneration tower in order to stably operate such a CO₂ recovery apparatus. It is necessary to adjust thermal energy input to a reboiler while monitoring the dissolution concentration of CO₂ absorbed in the absorbing liquid in order to stably and economically operate the CO₂ recovery apparatus. In general, the operation of the CO₂ recovery apparatus requires, for example, 15 to 20% thermal energy of the amount of power generation in a power generation facility. In particular, a large amount of energy is required for separating CO₂ from a rich solution to obtain a lean solution in the regeneration tower. Since the CO₂ recovery apparatus is often added to and installed on an existing power generation facility or the like, it is necessary to reduce its operational cost as much as possible. According to the present embodiment, the CO₂ recovery apparatus 10A can result in the reduced operational cost of a power generation facility including the CO₂ recovery apparatus 10A to cause improvement in economical efficiency since thermal energy needed in the regeneration tower 15 can be reduced.

According to the present embodiment, the CO₂ recovery apparatus 10A includes the solution mixing line L13A and can therefore allow the first lean solution 22A to be mixed with the reaction accelerator separated and obtained in the phase separator 13. Therefore, according to the present embodiment, in the CO₂ recovery apparatus 10A, the reaction accelerator separated from the first rich solution 23A can be effectively used for absorbing CO₂ in the absorption tower 11. In addition, the reaction accelerator can suppress the degradation of an amino group-containing compound. Therefore, the performance of absorbing CO₂ can be maintained in the second lean solution 22B, and therefore, CO₂ can be stably absorbed in the absorption tower 11.

According to the present embodiment, since the CO₂ recovery apparatus 10A includes the first gas/liquid separator 16A, CO₂ existing in the reaction accelerator rich phase 32A can be reduced beforehand, followed by supplying the second lean solution 22B to the absorption tower 11. Therefore, CO₂ in the reaction accelerator rich phase 32A in the state of being mixed into the second lean solution 22B can be inhibited from being supplied to the absorption tower 11, and the performance of absorbing CO₂ in the absorption tower 11 can be therefore inhibited from deteriorating in the CO₂ recovery apparatus 10B.

Although the temperature regulator 12 is disposed on the first rich solution supply line L11 in the present embodiment, the temperature regulator 12 may heat or cool the first rich solution 23A or may be disposed in the first gas/liquid separator 16A to phase-separate the first rich solution 23A while heating or cooling the first rich solution 23A.

### (Second Embodiment)

A CO₂ recovery apparatus according to a second embodiment will be described with reference to the drawings. The same sign will be applied to a member having the same function as that in the embodiment described above, and the detailed description thereof will be omitted.

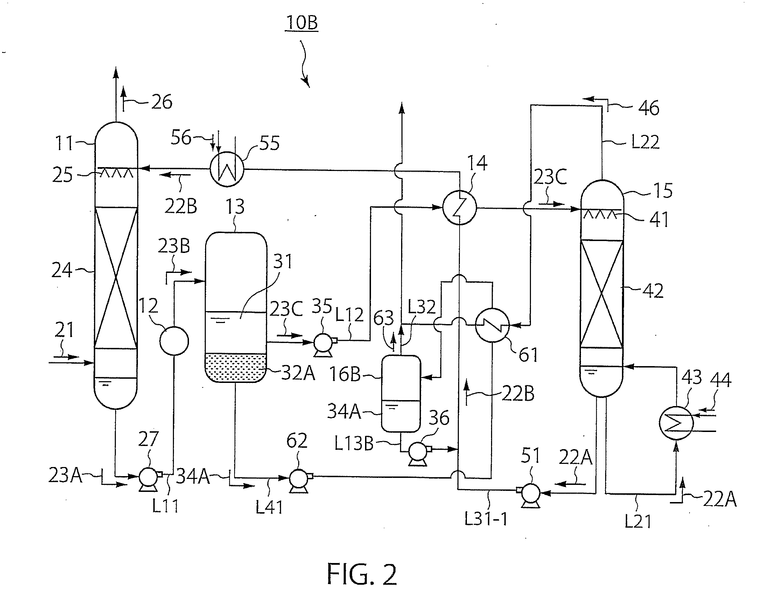

FIG. 2 is a schematic view illustrating the construction of the CO₂ recovery apparatus according to the second embodiment. As illustrated in FIG. 2, in the CO₂ recovery apparatus 10B, a solution supplied to the first gas/liquid separator 16A of the CO₂ recovery apparatus according to the first embodiment illustrated in FIG. 1 is changed from the second lean solution 22B to a reaction accelerator rich solution 34A. In other words, the CO₂ recovery apparatus 10B includes: a first gas/liquid separator 16B instead of the first gas/liquid separator 16A; a second heat exchanger (second heat exchange unit) 61; and a reaction accelerator rich solution supply line L41.

The second heat exchanger 61 is for heat exchange between the reaction accelerator rich solution 34A and a CO₂ gas 46 discharged from a regeneration tower 15. As the second heat exchanger 61, there can be used a known heat exchanger such as a plate heat exchanger or a shell & tube heat exchanger. A reaction accelerator rich phase 32A generated in a phase separator 13 is discharged as the reaction accelerator rich solution 34A into the reaction accelerator rich solution supply line L41. The reaction accelerator rich solution 34A is supplied to the first gas/liquid separator 16B through the reaction accelerator rich solution supply line L41 which links the phase separator 13 and the first gas/liquid separator 16B. The reaction accelerator rich solution 34A passes through the reaction accelerator rich solution supply line L41, is force-fed by a pump 62 disposed in the reaction accelerator rich solution supply line L41, and is heated by the second heat exchanger 61. The reaction accelerator rich solution 34A is subjected to heat exchange with the CO₂ gas 46 in the second heat exchanger 61 and then supplied to the first gas/liquid separator 16B.

The first gas/liquid separator 16B is for gas/liquid separation of CO₂ contained in the reaction accelerator rich solution 34A. In the present embodiment, gas/liquid separation of CO₂ contained in the reaction accelerator rich solution 34A heated by the second heat exchanger 61 is carried out.

Since the CO₂ gas 46 discharged from the regeneration tower 15 is at high temperature, the reaction accelerator rich solution 34A is heated by the CO₂ gas 46 in the second heat exchanger 61, whereby a slight amount of CO₂ contained in the reaction accelerator rich solution 34A is desorbed from an amino group-containing compound contained in the reaction accelerator rich solution 34A and released as a CO₂ gas 63 from the first gas/liquid separator 16B. The CO₂ gas 63 passes through a first CO₂ discharge mixing line L32, is mixed into the CO₂ gas 46, and is discharged.

The reaction accelerator rich solution 34A is discharged from the lower portion of the main body of the first gas/liquid separator 16B into a solution mixing line L13B. The reaction accelerator rich solution 34A is force-fed by a pump 36 disposed in the solution mixing line L13B and is supplied from the first gas/liquid separator 16B into a first lean solution supply line L31-1.

A second lean solution 22B in which the reaction accelerator rich solution 34A is mixed with a first lean solution 22A passes through the first lean solution supply line L31-1, is subjected to heat exchange with a third rich solution 23C in a first heat exchanger 14, and is cooled. Then, the second lean solution 22B passes through the first lean solution supply line L31-1 from the first heat exchanger 14, is subjected to heat exchange with cooling water 56 in a cooler 55, is cooled, and is then supplied as an absorbing liquid to an absorption tower 11.

Thus, according to the present embodiment, the CO₂ gas 46 discharged from the regeneration tower 15 can be effectively used as a heat source for releasing CO₂ contained in the reaction accelerator rich phase 32A separated from the phase separator 13 since the CO₂ recovery apparatus 10B includes the first gas/liquid separator 16B, the second heat exchanger 61, and the reaction accelerator rich solution supply line L41. Since the reaction accelerator rich phase 32A, in which contained CO₂ has been removed beforehand, can be mixed into the first lean solution 22A, the absorbing liquid that does not contain CO₂ can also be stably supplied as an absorbing liquid to the absorption tower 11 in the present embodiment.

### (Third Embodiment)

A CO₂ recovery apparatus according to a third embodiment will be described with reference to the drawings. The same sign will be applied to a member having the same function as that in the embodiments described above, and the detailed description thereof will be omitted.

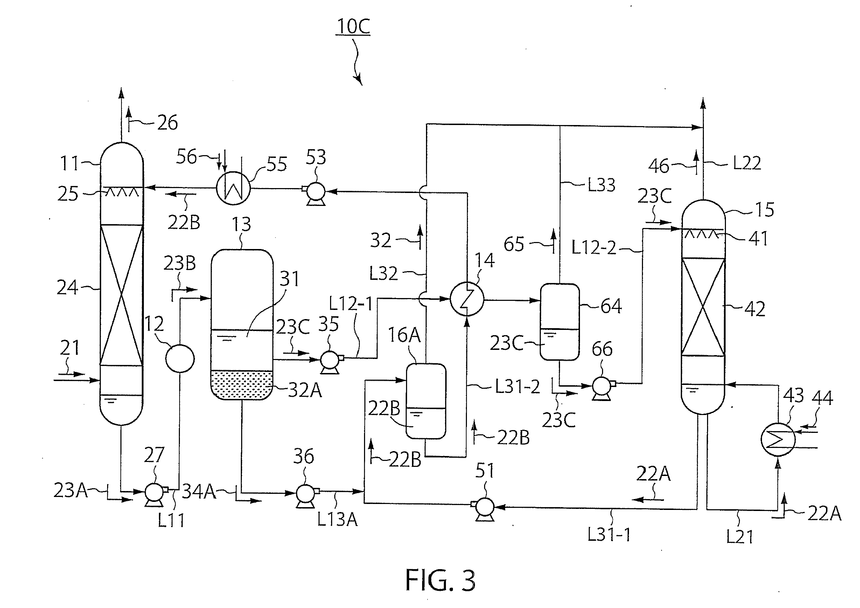

FIG. 3 is a schematic view illustrating the construction of the CO₂ recovery apparatus according to the third embodiment. As illustrated in FIG. 3, the CO₂ recovery apparatus according to the first embodiment illustrated in FIG. 1 is further provided with a second gas/liquid separator 64. In the present embodiment, a line that links a phase separator 13 and the second gas/liquid separator 64 is regarded as a second rich solution supply line L12-1 while a line that links the second gas/liquid separator 64 and a regeneration tower 15 is regarded as a second rich solution supply line L12-2.

The second gas/liquid separator 64 is for gas/liquid separation of CO₂ contained in a third rich solution 23C of which heat exchange is carried out in a first heat exchanger 14.

The third rich solution 23C is subjected to heat exchange with a second lean solution 22B in the first heat exchanger 14 and then supplied to the second gas/liquid separator 64 through the second rich solution supply line L12-1. Since the second lean solution 22B is at high temperature, part of CO₂ contained in the third rich solution 23C is desorbed from an amino group-containing compound contained in the third rich solution 23C by warming the third rich solution 23C with the second lean solution 22B in the first heat exchanger 14. Such CO₂ is released as a CO₂ gas 65 from the third rich solution 23C. The CO₂ gas 65 passes through a remaining CO₂ discharge mixing line L33, is mixed into a CO₂ gas 46, and is discharged.

The third rich solution 23C in the second gas/liquid separator 64 is discharged from the lower portion of the main body of the second gas/liquid separator 64 into the second rich solution supply line L12-2. The third rich solution 23C is force-fed by a pump 66 disposed on the second rich solution supply line L12-2 and supplied from the second gas/liquid separator 64 to the regeneration tower 15.

Thus, according to the present embodiment, CO₂ generated by heating the third rich solution 23C by the first heat exchanger 14 can be removed beforehand before the third rich solution 23C is supplied to the regeneration tower 15 since the CO₂ recovery apparatus 10C includes the second gas/liquid separator 64. Therefore, according to the present embodiment, in the CO₂ recovery apparatus 10C, energy needed for generating steam in a boiler 43 in order to regenerate the third rich solution 23C in the regeneration tower 15 can be reduced since the content of CO₂ in the third rich solution 23C supplied to the regeneration tower 15 can be reduced.

### (Fourth Embodiment)

A CO₂ recovery apparatus according to a fourth embodiment will be described with reference to the drawings. The same sign will be applied to a member having the same function as that in the embodiments described above, and the detailed description thereof will be omitted.

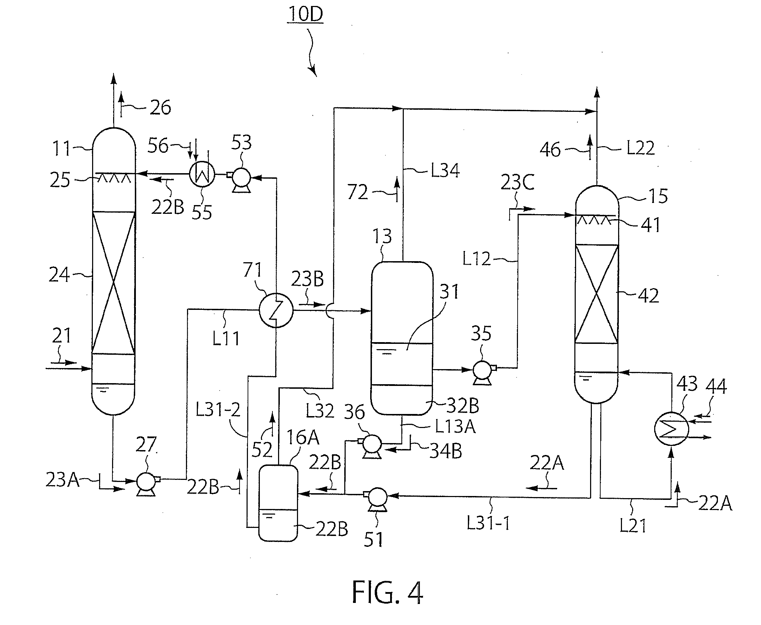

FIG. 4 is a schematic view illustrating the construction of the CO₂ recovery apparatus according to the fourth embodiment. As illustrated in FIG. 4, the CO₂ recovery apparatus 10D includes a third heat exchanger (third heat exchange unit) 71 as a temperature regulation unit instead of the temperature regulator 12 and first heat exchanger 14 of the CO₂ recovery apparatus 10A according to the first embodiment illustrated in FIG. 1. In other words, the CO₂ recovery apparatus 10D includes an absorption tower 11, the third heat exchanger 71, a phase separator 13, a regeneration tower 15, and a first gas/liquid separator 16A.

A first rich solution 23A discharged from the absorption tower 11 passes through a first rich solution supply line L11 and is subjected to heat exchange in the third heat exchanger 71.

The third heat exchanger 71 is for heat exchange between a second lean solution 22B and the first rich solution 23A. In the third heat exchanger 71, the first rich solution 23A is heated using the second lean solution 22B as a heat source. As the third heat exchanger 71, there can be used a known heat exchanger such as a plate heat exchanger or a shell & tube heat exchanger.

The first rich solution 23A is heated to 60 to 120°C by the third heat exchanger 71. An absorbing liquid is preferably heated to not less than 67°C or not more than 100°C. When the temperature of the first rich solution 23A is 60°C or more, the first rich solution 23A is maintained in a state in which a reaction accelerator in the first rich solution 23A is dissolved in the solution. Thus, the first rich solution 23A is heated in the temperature range described above by the third heat exchanger 71, whereby the first rich solution 23A becomes a mixed phase including two phases of an amino group-containing compound rich phase 31 and a reaction accelerator rich phase 32B. The amino group-containing compound rich phase 31 is a phase containing a large amount of an amino group-containing compound compared to the first rich solution 23A as described above. The reaction accelerator rich phase 32B is a phase containing a large amount of the reaction accelerator compared to the first rich solution 23A in a state in which the reaction accelerator is dissolved. Both the amino group-containing compound rich phase 31 and the reaction accelerator rich phase 32B exist in liquid form in the solution. The first rich solution 23A becomes in a state in which the mixed phase is formed in the third heat exchanger 71 and is supplied as a second rich solution 23B to the phase separator 13.

The phase separator 13 phase-separates the second rich solution 23B into the amino group-containing compound rich phase 31 and the reaction accelerator rich phase 32B. The reaction accelerator rich phase 32B is stored in the lower portion of the phase separator 13 due to a difference in specific gravity between the reaction accelerator rich phase 32B and the amino group-containing compound rich phase 31, a difference in hydrophilic degree between solutions, and/or the like to form the amino group-containing compound rich phase 31 in the upper portion of the reaction accelerator rich phase 32B. As a result, a state in which the amino group content compound rich phase 31 and the reaction accelerator rich phase 32B are phase-separated is formed in the phase separator 13.

The amino group-containing compound rich phase 31 is discharged from the upper portion of the phase separator 13 while the reaction accelerator rich phase 32B is discharged from the lower portion of the phase separator 13. The amino group-containing compound rich phase 31 is supplied as a third rich solution 23C from the phase separator 13 to the upper portion of the regeneration tower 15 through a second rich solution supply line L12.

The reaction accelerator rich phase 32B discharged from the phase separator 13 is discharged as a reaction accelerator rich solution 34B into a solution mixing line L13A. The solution mixing line L13A, through which the reaction accelerator rich solution 34B is supplied to a first lean solution 22A, is linked to a first lean solution supply line L31-1. The reaction accelerator rich solution 34B passes through the solution mixing line L13A and is mixed into the first lean solution 22A passing through the lean solution discharge line L12.

In the phase separator 13, CO₂ contained in the amino group-containing compound rich phase 31 and the reaction accelerator rich phase 32B is desorbed from the amino group-containing compound rich phase 31 and the reaction accelerator rich phase 32B and discharged as a CO₂ gas 72 from the upper portion of the phase separator 13. The CO₂ gas 72 passes through a second CO₂ discharge mixing line L34, is mixed into a CO₂ gas 46, and is discharged.

In the regeneration tower 15, CO₂ contained in the third rich solution 23C is released to regenerate the first lean solution 22A, which is stored in the lower portion of the regeneration tower 15. Part of the first lean solution 22A stored in the lower portion of the regeneration tower 15 is discharged from the lower portion of the regeneration tower 15 into a lean solution circulation line L21, heated by a reboiler 43, and then resupplied into the regeneration tower 15. The first lean solution 22A stored in the lower portion of the regeneration tower 15 is discharged as an absorbing liquid from the lower portion of the regeneration tower 15, passed through the first lean solution supply line L31-1, mixed with a reaction accelerator rich solution 34, and then supplied as the second lean solution 22B to the first gas/liquid separator 16A.

In the first gas/liquid separator 16A, gas/liquid separation of CO₂ contained in the second lean solution 22B is carried out. CO₂ contained in a reaction accelerator rich solution 34A is warmed by the first lean solution 22A and desorbed and released from an amino group-containing compound contained in the reaction accelerator rich solution 34A. CO₂ contained in the second lean solution 22B is discharged as a CO₂ gas 52 from the upper portion of the first gas/liquid separator 16A through a first CO₂ discharge mixing line L32.

In the first gas/liquid separator 16A, the second lean solution 22B is discharged from the lower portion of the main body into a second lean solution supply line L31-2 after separation of CO₂ contained in the solution. The second lean solution 22B passes through the second lean solution supply line L31-2 from the first gas/liquid separator 16A and is subjected to heat exchange with the third heat exchanger 71. The second lean solution 22B is subjected to heat exchange with the third rich solution 23C in the third heat exchanger 71, cooled, then subjected to heat exchange with cooling water 56 in a cooler 55, cooled, and then supplied as an absorbing liquid to the absorption tower 11.

As described above, according to the present embodiment, since the CO₂ recovery apparatus 10D includes the third heat exchanger 71 and the phase separator 13, the reaction accelerator contained in the first rich solution 23A can be removed as the reaction accelerator rich phase 32B, which is a liquid phase, from the second rich solution 23B, followed by supplying only the amino group-containing compound rich phase 31 as the third rich solution 23C to the regeneration tower 15. Thus, in the present embodiment, in the regeneration tower 15, dissociation of CO₂ contained in the third rich solution 23C can be facilitated, and energy needed for separating and recovering CO₂ from the third rich solution 23C can be reduced, since the content of the reaction accelerator in the first rich solution 23A can be reduced beforehand, followed by being supplied to the regeneration tower 15. Therefore, there can be reduced energy needed for generating steam in the reboiler 43 in order to separate and recover CO₂ from the third rich solution 23C.

In the present embodiment, the reaction accelerator rich phase 32B separated and obtained in the phase separator 13 can also be mixed into the first lean solution 22A since the CO₂ recovery apparatus 10D includes the solution mixing line L13A. Therefore, according to the present embodiment, in the CO₂ recovery apparatus 10D, the reaction accelerator obtained from the first rich solution 23A can be effectively used for absorbing CO₂ in the absorption tower 11. Since the second lean solution 22B can maintain the performance of absorbing CO₂, CO₂ can be stably adsorbed in the absorption tower 11.

In the present embodiment, CO₂ existing in the reaction accelerator rich phase 32B can also be reduced beforehand, followed by supplying the second lean solution 22B to the absorption tower 11, since the CO₂ recovery apparatus 10D includes the first gas/liquid separator 16A. Therefore, in the present embodiment, the performance of absorbing CO₂ in the absorption tower 11 can also be inhibited from being deteriorated in the CO₂ recovery apparatus 10D since CO₂ in the reaction accelerator rich phase 32B can be inhibited from being supplied, in the state of being mixed into the second lean solution 22B, to the absorption tower 11.

### (Fifth Embodiment)

A CO₂ recovery apparatus according to a fifth embodiment will be described with reference to the drawings. The same sign will be applied to a member having the same function as that in the embodiments described above, and the detailed description thereof will be omitted.

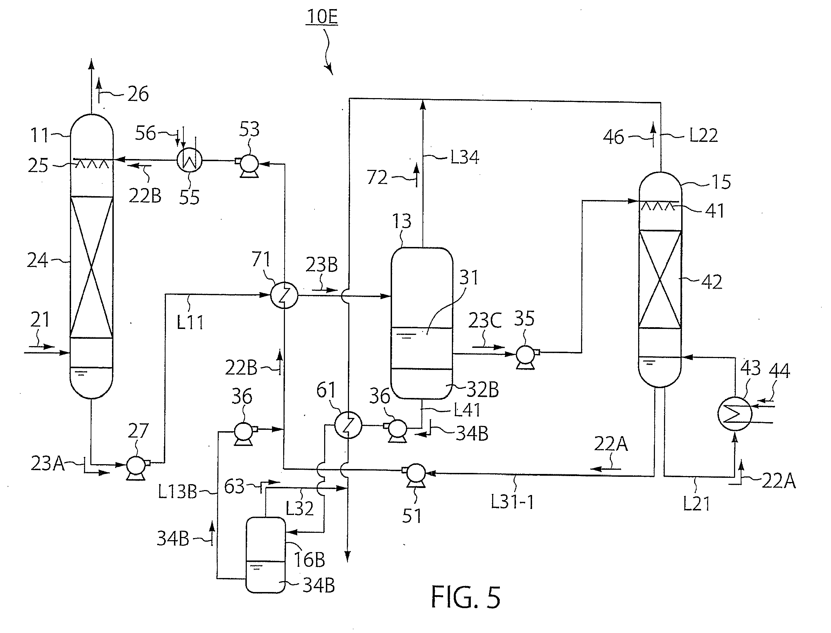

FIG. 5 is a schematic view illustrating the construction of the CO₂ recovery apparatus according to the fifth embodiment. As illustrated in FIG. 5, in the CO₂ recovery apparatus 10E, a solution supplied to the first gas/liquid separator 16A of the CO₂ recovery apparatus according to the fourth embodiment illustrated in FIG. 4 is changed from the second lean solution 22B to a reaction accelerator rich solution 34B. In other words, the CO₂ recovery apparatus 10E includes: a first gas/liquid separator 16B instead of the first gas/liquid separator 16A; a second heat exchanger 61; and a reaction accelerator rich solution supply line L41.

The reaction accelerator rich solution 34B generated in a phase separator 13 passes through the reaction accelerator rich solution supply line L41, is subjected to heat exchange with a CO₂ mixed gas of a CO₂ gas 46 and a CO₂ gas 72 in the second heat exchanger 61, and is then supplied to the first gas/liquid separator 16B. Since the CO₂ gas 46 discharged from a regeneration tower 15 is at high temperature, the reaction accelerator rich solution 34B is heated by the CO₂ mixed gas of the CO₂ gas 46 and the CO₂ gas 72 in the second heat exchanger 61, whereby a slight amount of CO₂ contained in the reaction accelerator rich solution 34B is desorbed from an amino group-containing compound contained in the reaction accelerator rich solution 34B and released as a CO₂ gas 63 from the first gas/liquid separator 16B. The CO₂ gas 63 passes through a first CO₂ discharge mixing line L32, is mixed into the CO₂ gas 46 and the CO₂ gas 72, and is discharged. A second CO₂ discharge mixing line L34 may be disposed in a potion closer to a downstream side in a gas flow direction than the heat exchanger 61 although linking the regeneration tower 15 and the second heat exchanger 61. As a result, the reaction accelerator rich solution 34B can be subjected to heat exchange with only the CO₂ gas 72.

The reaction accelerator rich solution 34B is discharged from the lower portion of the main body of the first gas/liquid separator 16B into a solution mixing line L13B, supplied to a first lean solution supply line L31-1, and mixed into a first lean solution 22A.

A second lean solution 22B in which the first lean solution 22A is mixed into the reaction accelerator rich solution 34B passes through the first lean solution supply line L31-1, is subjected to heat exchange with a first rich solution 23A in a third heat exchanger 71, and is cooled. Then, the second lean solution 22B passes through the first lean solution supply line L31-1 from the third heat exchanger 71, is subjected to heat exchange with cooling water 56 in a cooler 55, is cooled, and is then supplied as an absorbing liquid to an absorption tower 11.

Thus, according to the present embodiment, the CO₂ mixed gas of the CO₂ gas 46 discharged from the regeneration tower 15 and the CO₂ gas 72 can be effectively used as a heat source for releasing CO₂ contained in a reaction accelerator rich phase 32B since the CO₂ recovery apparatus 10E includes the first gas/liquid separator 16B, the second heat exchanger 61, and the reaction accelerator rich solution supply line L41. Since CO₂ contained in a reaction accelerator rich phase 32A can be removed beforehand, followed by being mixed into the first lean solution 22A, an absorbing liquid that does not contain CO₂ can also be stably supplied as an absorbing liquid to the absorption tower 11 in the present embodiment.

In the first to third embodiments of the embodiments described above, the first rich solution is allowed to become the second rich solution containing the precipitate containing the reaction accelerator is in the state of being dispersed in the temperature regulation unit, followed by phase-separating the second rich solution into the amino group-containing compound rich phase and the reaction accelerator rich phase in the phase separation unit. In the fourth and fifth embodiments, the first rich solution is allowed to become the second rich solution containing the mixed phase of the amino group-containing compound rich phase and the reaction accelerator rich phase in the temperature regulation unit and then phase-separated into the amino group-containing compound rich phase and the reaction accelerator rich phase in the phase separation unit.

Specifically, the CO₂ recovery apparatus according to the first to third embodiments includes: an absorption tower in which a discharge gas containing CO₂ is contacted with an absorbing liquid comprising an amino group-containing compound with steric hindrance and a reaction accelerator to allow the absorbing liquid to absorb CO₂ and to be a first rich solution;and a temperature regulation unit in which the first rich solution containing CO₂ is heated or cooled to 20 to 60°C to allow the first rich solution to be a second rich solution containing a precipitate containing the reaction accelerator in the state of being dispersed. In addition, the CO₂ recovery apparatus includes: a phase separation unit in which the second rich solution is separated into an amino group-containing compound rich phase and a reaction accelerator rich phase to discharge the amino group-containing compound rich phase as a third rich solution and to discharge the reaction accelerator rich phase as a reaction accelerator rich solution, the amino group-containing compound rich phase comprising a large amount of an amino group-containing compound compared to the first rich solution, and the reaction accelerator rich phase comprising a large amount of the reaction accelerator compared to the first rich solution; and a regeneration tower in which CO₂ contained in the third rich solution is separated to regenerate the third rich solution as a first lean solution. In addition, the CO₂ recovery apparatus includes: a solution mixing line through which the reaction accelerator rich solution is supplied to the first lean solution; and a first gas/liquid separation unit for separating CO₂ contained in a second lean solution, in which the reaction accelerator rich solution is mixed into the first lean solution, or the reaction accelerator rich solution.

The CO₂ recovery apparatus according to the fourth or fifth embodiment includes: an absorption tower in which a discharge gas containing CO₂ is contacted with an absorbing liquid comprising an amino group-containing compound with steric hindrance and a reaction accelerator to allow the absorbing liquid to absorb CO₂ and to be a first rich solution;; and a temperature regulation unit in which the first rich solution containing CO₂ is heated to 67 to 120°C to allow a second rich solution containing a mixed phase of an amino group-containing compound rich phase and a reaction accelerator rich phase, the amino group-containing compound rich phase comprising a large amount of an amino group-containing compound compared to the first rich solution, and the reaction accelerator rich phase comprising a large amount of the reaction accelerator compared to the first rich solution. In addition, the CO₂ recovery apparatus includes: a phase separation unit in which the second rich solution is separated into the amino group-containing compound rich phase and the reaction accelerator rich phase to discharge the amino group-containing compound rich phase as a third rich solution and to discharge the reaction accelerator rich phase as a reaction accelerator rich solution; a regeneration tower in which CO₂ contained in the third rich solution is separated to regenerate the third rich solution as a first lean solution; and a solution mixing line through which the reaction accelerator rich solution is supplied to the first lean solution. In addition, the CO₂ recovery apparatus includes a first gas/liquid separation unit for separating CO₂ contained in a second lean solution, in which the reaction accelerator rich solution is mixed into the first lean solution, or the reaction accelerator rich solution. In the CO₂ recovery apparatus, the temperature regulation unit is a third heat exchange unit in which heat exchange between the second lean solution and the first rich solution is carried out.

In the present embodiments described above, a case in which the discharge gas 21 contains CO₂ as an acid gas is described. However, the present embodiments can also be similarly applied to a case in which another acid gas such as H₂S, COS, CS₂, NH₃, or HCN, other than CO₂, is contained. In addition, the present embodiments can also be similarly applied to a case in which the discharge gas 21 contains an acid gas other than CO₂.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A carbon dioxide recovery apparatus comprising:
an absorption tower in which a discharge gas containing CO₂ is contacted with an absorbing liquid comprising an amino group-containing compound with steric hindrance and a reaction accelerator to allow said absorbing liquid to absorb CO₂;
a temperature regulation unit in which a first rich solution discharged from said absorption tower is heated or cooled to be a solution in which a precipitate comprising said reaction accelerator is dispersed or to be a solution comprising a reaction accelerator rich phase comprising a large amount of said reaction accelerator compared to said first rich solution;
a phase separation unit in which a second rich solution, said second rich solution being an absorbing liquid passed through said temperature regulation unit, is separated into an amino group-containing compound rich phase and a reaction accelerator rich phase to discharge said amino group-containing compound rich phase as a third rich solution and to discharge said reaction accelerator rich phase as a reaction accelerator rich solution, said amino group-containing compound rich phase comprising a large amount of an amino group-containing compound compared to said first rich solution, and said reaction accelerator rich phase comprising a large amount of said reaction accelerator compared to said first rich solution;
a regeneration tower in which CO₂ contained in said third rich solution is separated to regenerate said third rich solution; and
a solution mixing line through which said reaction accelerator rich solution is supplied to a first lean solution which is an absorbing liquid discharged from said regeneration tower.

2. The apparatus according to claim 1, wherein said amino group-containing compound is one or more selected from the group consisting of alkanolamines.

3. The apparatus according to claim 1, wherein said amino group-containing compound is represented by said following general formula (1): 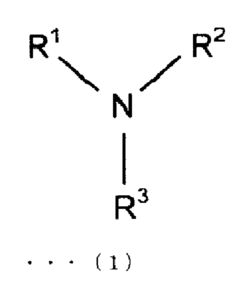 (in said above formula (1), R¹ is hydroxyalkyl, R² is unsubstituted C₃-C₁₀ cyclic alkyl, and R³ is hydrogen or unsubstituted alkyl).

4. The apparatus according to claim 1, further comprising a first gas/liquid separation unit for separating CO₂ contained in a second lean solution, in which said reaction accelerator rich solution is mixed into said first lean solution, or said reaction accelerator rich solution.

5. The apparatus according to claim 1, further comprising a first heat exchange unit in which heat exchange between a second lean solution, in which said reaction accelerator rich solution is mixed into said first lean solution, and said third rich solution is carried out.

6. The apparatus according to claim 4, wherein
said first rich solution is heated or cooled to 20 to 60°C to allow said second rich solution to be a solution in which a precipitate containing said reaction accelerator is dispersed in said temperature regulation unit; and
CO₂ contained in said second lean solution is separated in said first gas/liquid separation unit.

7. The apparatus according to claim 4, further comprising a second heat exchange unit in which heat exchange between said reaction accelerator rich solution and CO₂ discharged from said regeneration tower is carried out, wherein
the first rich solution is heated or cooled to 20 to 60°C to allow said second rich solution to be a solution in which a precipitate containing said reaction accelerator is dispersed in said temperature regulation unit; and
CO₂ contained in said reaction accelerator rich solution subjected to heat exchange in said second heat exchange unit, is separated in said first gas/liquid separation unit.

8. The apparatus according to claim 5, further comprising a second gas/liquid separation unit which is disposed between said second heat exchange unit and said regeneration tower and which separates CO₂ from said third rich solution.

9. The apparatus according to claim 4, wherein
said temperature regulation unit is a third heat exchange unit in which heat exchange between said second lean solution and said first rich solution is carried out,
in said temperature regulation unit, said first rich solution is heated to 60 to 120°C to allow said second rich solution to be a mixed phase comprising an amino group-containing compound rich phase and a reaction accelerator rich phase, wherein said amino group-containing compound rich phase comprising a large amount of an amino group-containing compound compared to said first rich solution, and said reaction accelerator rich phase comprising a large amount of said reaction accelerator compared to said first rich solution; and
CO₂ is separated from said second lean solution in said first gas/liquid separation unit.

10. The apparatus according to claim 9, further comprising a fourth heat exchange unit in which heat exchange between said reaction accelerator rich solution and carbon dioxide gas discharged from said regeneration tower is carried out.

11. The apparatus according to claim 1, further comprising a first CO₂ discharge mixing line for mixing CO₂ discharged from said regeneration tower with CO₂ discharged from a first gas/liquid separation unit for separation of CO₂ contained in a second lean solution or said reaction accelerator rich solution, wherein said second lean solution is a solution in which said reaction accelerator rich solution is mixed into said first lean solution.

12. The apparatus according to claim 9, further comprising a second CO₂ discharge mixing line for mixing CO₂ discharged from said regeneration tower with CO₂ discharged from said phase separation unit.

13. A carbon dioxide recovery method comprising:
a CO₂ recovery step of contacting a discharge gas containing CO₂ with an absorbing liquid comprising an amino group-containing compound with steric hindrance and a reaction accelerator to allow said absorbing liquid to absorb CO₂ in an absorption tower;
a temperature regulation step of heating or cooling a first rich solution which is an absorbing liquid discharged from said absorption tower to allow said first rich solution to be a solution in which a precipitate comprising said reaction accelerator is dispersed or to be a solution comprising a reaction accelerator rich phase comprising a large amount of said reaction accelerator compared to said first rich solution in a temperature regulation unit;
a phase separation step of separating a second rich solution, said second rich solution being an absorbing liquid passed through said temperature regulation unit, into an amino group-containing compound rich phase and a reaction accelerator rich phase to discharge said amino group-containing compound rich phase as a third rich solution and to discharge said reaction accelerator rich phase as a reaction accelerator rich solution, said amino group-containing compound rich phase comprising a large amount of an amino group-containing compound compared to said first rich solution, and said reaction accelerator rich phase comprising a large amount of said reaction accelerator compared to said first rich solution;
a regeneration step of separating CO₂ contained in said third rich solution to regenerate said third rich solution in a regeneration tower; and
a solution mixing step of mixing a first lean solution which is an absorbing liquid discharged from said regeneration tower with said reaction accelerator rich solution.

14. The method according to claim 13, wherein at least one selected from the group consisting of alkanolamines is used as said amino group-containing compound.

15. The method according to claim 13, wherein said amino group-containing compound is represented by said following general formula (1): 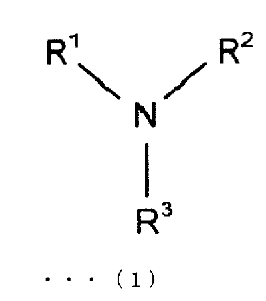 (in said above formula (1), R¹ is hydroxyalkyl, R² is unsubstituted C₃-C₁₀ cyclic alkyl, and R³ is hydrogen or unsubstituted alkyl).

16. The method according to claim 13, further comprising a first gas/liquid separation step of separating CO₂ contained in a second lean solution, in which said reaction accelerator rich solution is mixed into said first lean solution, or said reaction accelerator rich solution.

17. The method according to claim 13, further comprising a first heat exchange step of carrying out heat exchange between a second lean solution, in which said reaction accelerator rich solution is mixed into said first lean solution, and said third rich solution.

18. The method according to claim 16, wherein
in said temperature regulation step, heat exchange between said second lean solution and said first rich solution is carried out,
said first rich solution is heated to 60 to 120°C to allow said second rich solution to be a mixed phase comprising an amino group-containing compound rich phase and a reaction accelerator rich phase,
wherein said amino group-containing compound rich phase comprising a large amount of an amino group-containing compound compared to said first rich solution, and said reaction accelerator rich phase comprising a large amount of said reaction accelerator compared to said first rich solution; and separating CO₂ contained in said second lean solution in said first gas/liquid separation step.

19. The method according to claim 18, wherein heat exchange between said reaction accelerator rich solution and a CO₂ gas discharged from said regeneration tower is carried out.
